# EUROPEAN PATENT SPECIFICATION

(11) **EP 1 617 673 B1**
(45) Date of publication and mention of the grant of the patent: **13.09.2006**
(21) Application number: 04016614.2
(22) Date of filing: 15.07.2004
(51) Int. Cl.: H04N 7/26, H04N 5/14, H04N 11/16

(54) **Means and method for motion estimation in digital Pal-Plus encoded videos**
Vorrichtung und Methode zur Bewegungsschätzung von Videodaten im digitalen Pal-Plus Format
Moyen et procédé d'éstimation de mouvement des signaux vidéo Pal-Plus

(43) Date of publication of application: 18.01.2006
(73) Proprietor: MATSUSHITA ELECTRIC INDUSTRIAL CO., LTD., Kadoma-shi, Osaka-fu, 571 (JP)
(72) Inventor: Eckhart Michael, 65207 Wiesbaden (DE); Landsiedel, Thilo, 63110 Rodgau (DE)
(74) Representative: Gerstein, Hans Joachim

(56) References cited:
- DE-A- 3 936 179
- HAAN DE G ET AL: "AN EFFICIENT TRUE-MOTION ESTIMATOR USING CANDIDATE VECTORS FROM A PARAMETRIC MOTION MODEL" IEEE TRANSACTIONS ON CIRCUITS AND SYSTEMS FOR VIDEO TECHNOLOGY, IEEE INC. NEW YORK, US, vol. 8, no. 1, 1 February 1998 (1998-02-01), pages 85-91, XP000737028 ISSN: 1051-8215
- "European Broadcasting Union Union Européenne de Radio-Télévision; Television Systems; Enhanced 625-line Phased Alternate Line (PAL) television; PALplus; FINAL DRAFT prETS 300 731" ETSI STANDARDS, EUROPEAN TELECOMMUNICATIONS STANDARDS INSTITUTE, SOPHIA-ANTIPO, FR, vol. BC, November 1996 (1996-11), XP014014347 ISSN: 0000-0001

## Description

The invention relates to a method for motion estimation in digital Pal-Plus encoded videos by comparing blocks comprising a set of pixel values of subsequent images of the video and determining motion vectors as a result of said step of comparing, wherein an Pal-Plus decoded image comprises core lines and helper lines for broadcast transmission, the helper lines having luminance pixel values for restoring full vertical luminance resolution.

The invention further relates to means for processing digital Pal-Plus encoded videos, wherein an Pal-Plus encoded image comprises core lines and helper lines for broadcast transmission, the helper lines having luminance pixel values for restoring full vertical luminance resolution, comprising a motion estimation means for comparing blocks comprising a set of luminance pixel values of subsequent images of the video and determining motion vectors as a result of said step of comparing.

Motion estimation as part of digital processing in modern TV receivers is used in picture improvement algorithms like e. g. format conversion, motion compensated up-conversion. Motion compensated up-conversion of luminance pixel values of video images may be used from 50 Hz to higher frequencies, e. g. 60 Hz, 66,67 Hz, 75 Hz, 100 Hz, .... (or from 60 Hz to 72 Hz, 80 Hz, 90 Hz, 120 Hz,...).

A variety of block matching algorithm is well known in the prior art. An image field is divided into small blocks and these blocks are vector shifted to a field at another temporal position to find the identical pixel data. Several candidate vectors are evaluated for each search block by using an error function as criteria. The most block matching algorithms are based on the Summed Absolute Difference (SAD), wherein, for example, the candidate vector with the lowest absolute difference will be chosen by the motion estimator as best vector for the actual search block.

As the vector information is generated by the block matching algorithm, an intermediate field is interpolated using motion compensation techniques.

EP 0 578 290 A1 discloses details of an exemplary motion estimation algorithm.

Further, in Gerard de Haan and Paul W. A. C. Biezen: "An efficient true estimator using candidate vectors from a parametric motion model" in: IEEE Transactions on Circuits and Systems for Video Technology, Vol. 8, No. 1, February 1998 is a motion estimation algorithm disclosed, wherein candidate vectors are chosen from a parametric motion model.

In the ETSI standard "European Broadcasting Union Union Européenne de Radio-Télévision; Television Systems; enhanced 625-line faced alternate line (PAL) television; Pal-Plus; final draft PRETS 300 731 "At the standards, European telecommunications standards institute, Sophia-Antipolis FR, Vol. BC, November 1996" discloses a basic method for Pal-Plus encoding process especially for vertical helper encoding and the motion detector operation.

DE 39 36 179 A discloses a method for the insertion of a 16:9 wide-picture-format into existing standard systems in 4:3 format, wherein format information is transmitted as auxiliary dater in the ultra-black region for shifting the clamping reference value and the black level.

Standard PAL videos are defined having an aspect ratio of 4:3. Further, a Pal-Plus standard is defined for encoding television signals for the backward compatible transmission of video signals with an aspect ratio of 16:9 over the standard PAL transmission system. To achieve this, the picture height of the main video signal is reduced from 576 active lines to 432 active lines. Most of the remaining lines are used for the transmission of a low-level modulated helper signal, which is applied in the Pal-Plus decoder to restore the full vertical luminance resolution. In addition to the modulated helper signal, a Pal-Plus signal is processed to reduce cross-luminance and cross-crominance effects.

Furthermore, a status line is used for the translation of the aspect ratio and other system information, and Pal-Plus reference signals are also transmitted.

Helper signals in the so called black bars or helper lines of the Pal-Plus encoded video signal are symmetrically added around the black level of the television signal. For example, normal black level is 16 and the helper signals in the black bars may have any value in the range of 16 ± 16, that is in the range of 0 to 32. The pixel values in the black bars are dependent from the active picture between the black bars.

As a consequence of this, the pixel difference of motion estimation blocks in the black bars is not zero. So, the motion estimation algorithms detect motion vectors in the black bars even, if in these two areas is no motion of the active video signal.

In order to overcome the problem above, it is an object of the invention to provide an improved method for motion estimation in digital Pal-Plus encoded videos and an improved means for processing digital Pal-Plus encoded videos.

According to the present invention, the method for motion estimation comprises a further step of clipping the luminance pixel values at least of the helper lines to a threshold luminance pixel value of a defined normal black level, in case that the luminance pixel values are below the threshold luminance pixel value, and using the clipped luminance pixel values in a range of the threshold luminance pixel value and above for motion estimation.

Further, according to the present invention, the means for processing digital Pal-Plus encoded videos further comprises a clipping means for clipping the luminance pixel values at least of the helper lines to a threshold luminance pixel value of a defined normal black level, in case that the luminance pixel values are below the threshold luminance pixel value, wherein the clipping means are provided upstream of the motion estimation means, so that the motion estimation means receives the clipped luminance pixel values in the range of the threshold luminance pixel value and above for motion estimation.

Thus, according to the present invention, the black level in the two black bars or helper lines of the Pal-Plus video signals is made constant by clipping the luminance pixel values at a threshold luminance pixel value that is equal to the defined black level. All luminance pixel values that are smaller than this threshold luminance pixel value are set to the defined black level. After the pixel luminance value clipping, the motion estimation does not find any motion vectors in the areas of the black bars.

The threshold luminance pixel value is preferably 16, that is the luminance value of the normal black level.

Most preferably, after the step of clipping and before motion estimation, low pass filtering of the digital video data is performed. The low pass filter in the pre-processing improves the motion estimation performance. The edges of the moving objects get a broader border and so the motion estimation algorithm can find this objects better.

The invention is described in more detail by way of the enclosed drawings, in which
- Figure 1 -: is a block diagram of the process of field-rate-conversion and motion estimation pre-processing according to the present invention;
- Figure 2 -: is a block diagram of the clipping means according to the present invention;
- Figure 3 -: shows an image field divided in block raster for motion estimation;
- Figure 4 -: shows a Pal-Plus television signal before broadcast transmission with an aspect ratio of 16:9 and 576 active lines;
- Figure 5 -: shows a Pal-Plus digital video signal during broadcast transmission comprising 432 core lines;
- Figure 6 -: shows upper and lower helper lines of the Pal-Plus digital video signal during broadcast transmission;
- Figure 7 -: shows a Pal-Plus television signal displayed of a television display for an aspect ratio of 4:3;
- Figure 8 -: shows a Pal-Plus television signal displayed of a television display for an aspect ration 16:9;
- Figure 9 -: shows a block diagram of subsequent clipping means and low pass filtering means for the motion estimation.

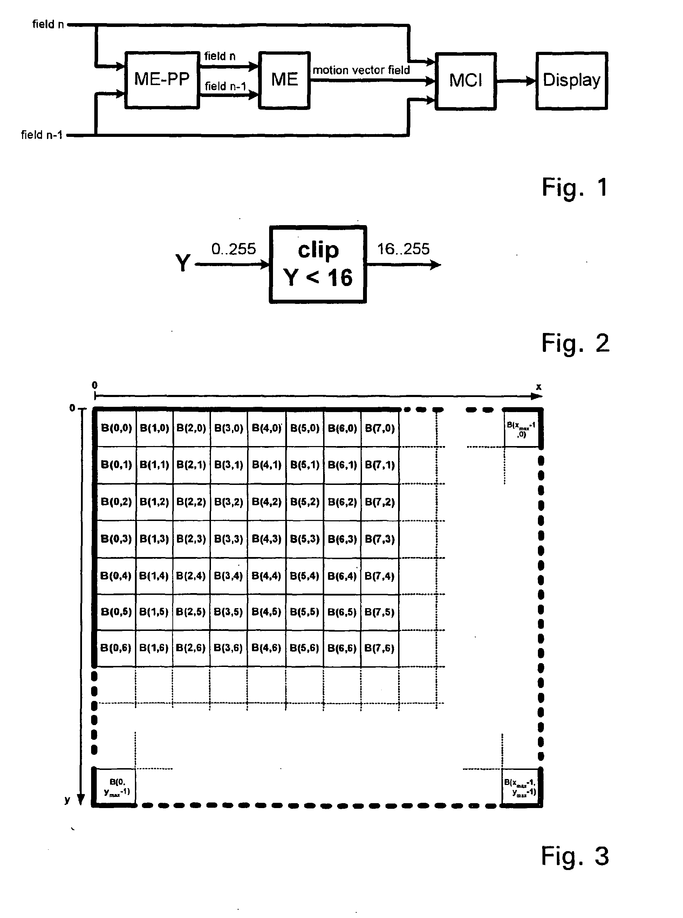

Figure 1 shows the block diagram of means for field rate-conversion with motion estimation pre-processing according to the present invention.

According to the prior art, a present image field n is fed to a motion compensation circuit MCI together with an immediately advanced image field -1. The motion compensation circuit is provided for interpolating an intermediate field using commonly known block matching circuit/algorithm ME. The resulting digital video signal from the motion compensation circuit, which is e. g. provided for motion compensated conversion of luminance pixel values from 50 Hz or 60 Hz to higher frequencies is fed to a display for displaying the resulting video with improved picture quality.

In order to prevent wrong motion vector estimates, luminance pixel values are set to a threshold pixel value defined for a normal black level in case, that the luminance pixel values are lower than the threshold value of e. g. 16 before motion estimation. For doing so, the digital video data of a present image field n and the immediately advanced image field n -1 are fed to clipping means ME-PP. The clipped digital video data of the present image field n and advanced image field n -1 are fed to the motion estimation means ME. The motion vector field calculated by the motion estimation algorithm performed in the motion estimation means ME are provided to the motion compensation circuit MCI.

Figure 2 shows the diagram of the clipping means ME-PP, wherein the threshold pixel value for a normal black value is set to 16. This results in, that the luminance pixel values Y in the range of 0 to 255 are set to a range of 16 to 255 after the step of clipping. That is, because the pixel values below the threshold pixel value of 16 are set to the defined threshold value. The pixel values above the threshold values are kept unchanged.

Figure 3 shows an image field divided in block raster for motion estimation. It can be seen from the diagram, that an image of a digital video comprises a number of xₘₐₓ blocks B (x, y) in horizontal X-direction and a number yₘₐₓ blocks B (x, y) in the vertical Y-direction. Each block B(x, y) comprises a set of pixel.

For motion estimation, a block B (i, j) in an actual image field n at the X, Y-position i, j is compared with blocks B ((i ± o), (j ± p)) in an image field at another temporal position n-1 in the area of the actual search block B (i, j) shifted by a position difference n. To find the identical pixel data, those several candidate block B ((i ± o, j ± p)) are compared to the search block B (i, j) and candidate vectors are calculated using an error function as criterion. The candidate vectors are describing the change of position. The candidate vector with the lowest Summed Absolute Difference SAD will be chosen by motion estimator means ME as best vector for the actual search block B (i, j).

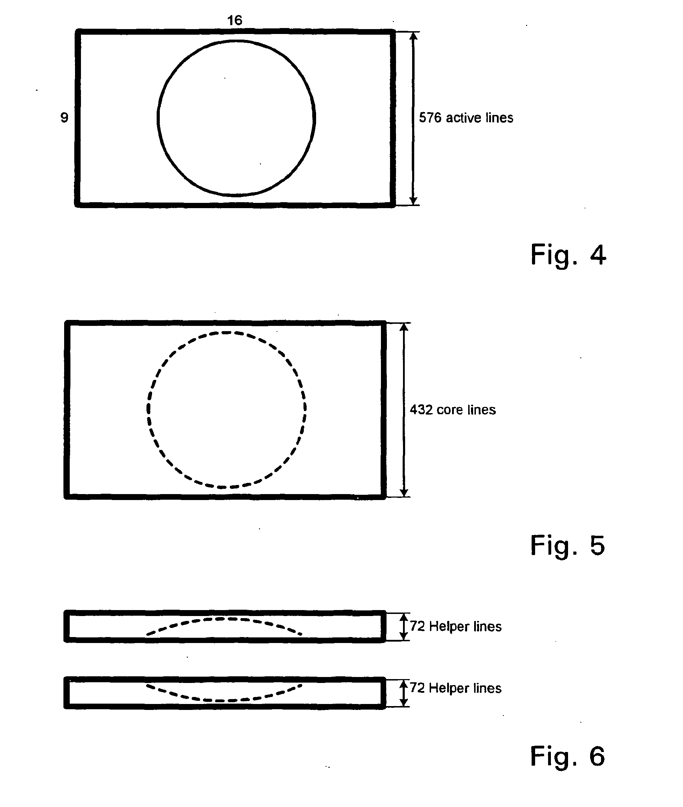

Figure 4 shows a Pal-Plus television signal before broadcast transmission having an aspect ratio of 16:9. The number of active lines of each video image is 576.

Figure 5 shows the Pal-Plus television signal during broadcast transmission comprising 432 core lines only. The reduction of the active lines from 576 to 432 is necessary for reducing the picture height of the main video signal in order to show a television image of an aspect ratio of 4:3.

Most of the remaining lines are used for transmission of a low-level modulated helper signal, which is applied in the Pal-Plus decoder to restore the full vertical luminance resolution. As shown in figure 3, 72 upper helper lines and 72 lower helper lines are provided and symmetrically added around the black level of the television signal in the upper and lower black bars of the 4:3 image. If for example, the normal black level is a pixel value of 16, the helper signals and the helper lines of the black bars may have any value in the range of the 16 ± 16. It is further shown in figure 3, that the pixel values in the helper lines are depended form the active picture between the black bars.

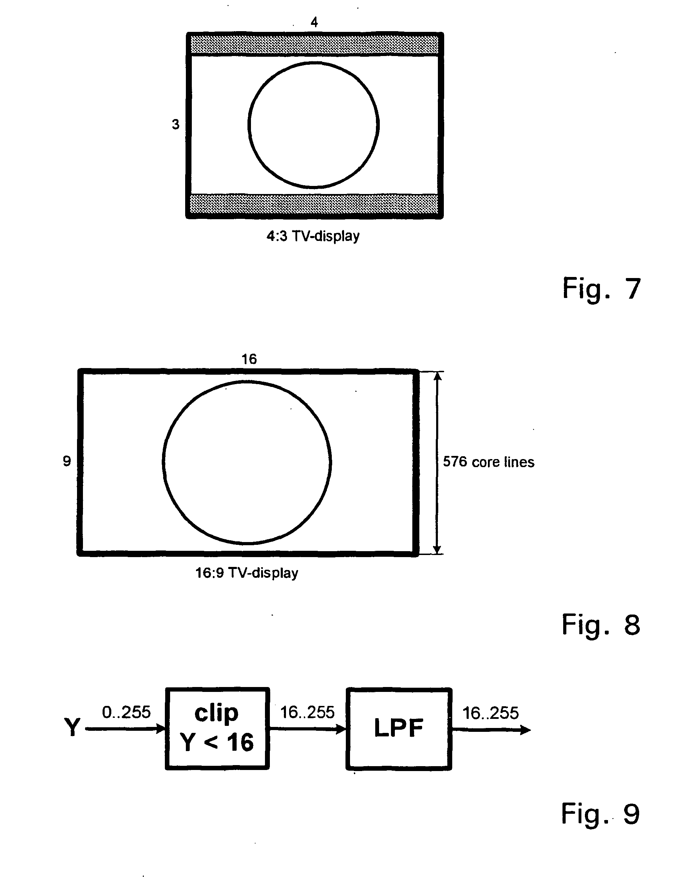

Figure 7 shows a Pal-Plus television signal displayed of a television set with an aspect ratio of 4:3. It becomes clear, that the height of the image is reduced and upper and lower black bars are added.

Figure 8, on the other hand, shows a Pal-Plus signal displayed of a television set having an aspect ratio of 16:9, which corresponds to the aspect ratio of the Pal-Plus signal before broadcast transmission. Then, all of the 576 call lines are used and no black bars are added.

Figure 9 shows a block diagram of clipping means ME-PP followed by a low pass filter LPF. The clipping means correspond to the clipping means shown as in figure 2 and described earlier. The low pass filter LPF, that is located between the pixel value clipping means ME-PP and the motion estimation means ME improves the motion estimation performance in the prepocessing. By way of low pass filtering, the edges of the moving objects gets a broader border and so the motion estimation algorithm can find these objects better.

## Claims

1. Method for motion estimation in digital Pal-Plus videos by comparing blocks comprising a set of pixel values of subsequent images of the video and determining motion vectors as a result of said step of comparing, wherein an Pal-Plus encoded image comprises core lines and helper lines for broadcast transmission, the helper lines having luminance pixel values for restoring full vertical luminance resolution, ***characterised by*** clipping the luminance pixel values at least of the helper lines to a threshold pixel value of a defined normal black level, in case that the luminance pixel values are below the threshold luminance pixel value, and using the clipped luminance pixel values in the range of the threshold luminance pixel value and above for motion estimation.

2. Method according to claim 1, ***characterised in* that** the threshold luminance pixel value is 16.

3. Method according to claim 1 or 2, ***characterised by*** low pass filtering digital video data after the step of clipping and before motion estimation.

4. Means for processing digital Pal-Plus encoded videos, wherein Pal-Plus encoded images of the videos comprises core lines and helper lines for broadcast transmission, the helper lines having luminance pixel values for restoring full vertical luminance resolution, comprising a motion estimation means for comparing blocks comprising a set of luminance pixel values of subsequent images of the video and determining motion vectors as a result of said step of comparing,
***characterised by***
clipping means for clipping the luminance pixel values at least of the helper lines to a threshold luminance pixel value of a defined normal black level, in case that the luminance pixel values are below the threshold luminance pixel value,
wherein the clipping means are provided upstream of the motion estimation means, so that the motion estimation means receives the clipped luminance pixel values in the range of the threshold luminance pixel value and above for motion estimation. .

5. Means according to claim 4, ***characterised* by** a low pass filter provided between the clipping means and the motion estimation means.

## Patentansprüche

1. Verfahren zur Bewegungsschätzung in digitalen Pal-Plus-Videos durch Vergleichen von Blöcken, die einen Satz von Pixelwerten von aufeinanderfolgenden Bildern des Videos haben, und Bestimmen von Bewegungsvektoren als ein Ergebnis des Vergleichsschritts, wobei ein im Pal-Plus-Format kodiertes Bild Kernlinien und Hilfslinien zur Rundfunkübertragung hat und die Hilfslinien Luminanzpixelwerte zur Wiederherstellung der vollständigen vertikalen Luminanzauflösung haben, **gekennzeichnet durch** Begrenzung der Luminanzpixelwerte mindestens der Hilfslinien auf einen Pixel-Schwellwert eines definierten Schwarz-Pegel-Normals für den Fall, dass die Luminanzpixelwerte unterhalb des Luminanzpixelschwellwertes sind und Nutzen der begrenzten Luminanzpixelwerte in dem Bereich des Luminanzpixelschwellwertes und höher zur Bewegungsschätzung.

2. Verfahren nach Anspruch 1, **dadurch gekennzeichnet, dass** der Luminanzpixelschwellwert 16 ist.

3. Verfahren nach Anspruch 1 oder 2, **gekennzeichnet durch** Tiefpassfiltern von digitalen Videodaten nach dem Schritt der Begrenzung und vor der Bewegungsschätzung.

4. Vorrichtung zur Verarbeitung von Videodaten im digitalen Pal-Plus-Format, wobei Pal-Plus kodierte Bilder der Videos Kernlinien und Hilfslinien zur Rundfunkübertragung haben und die Hilfslinien Luminanzpixelwerte zur Wiederherstellung der vollständigen vertikalen Luminanzauflösung haben, mit Bewegungsschätzmittein zum Vergleichen von Blöcken, die einen Satz von Luminanzpixelwerten von aufeinanderfolgenden Bildern des Videos haben und Bestimmen von Bewegungsvektoren als ein Ergebnis des Schritts des Vergleichens,
**gekennzeichnet durch**,
Begrenzungsmitteln zur Begrenzung der Luminanzpixelwerte mindestens der Hilfslinien auf einen Luminanzpixelschwellenwert eines definierten Schwarz-Pegel-Normals in dem Fall, dass die Luminanzpixelwerte unterhalb des Luminanzpixelschwellenwertes sind,
wobei die Begrenzungsmittel stromaufwärts der Bewegungsschätzmittel angeordnet sind, so dass die Bewegungsschätzmittel die begrenzten Luminanzpixelwerte in dem Bereich der Luminanzpixelschwellenwerte und höher zur Bewegungsschätzung empfangen.

5. Vorrichtung nach Anspruch 4, **gekennzeichnet durch** ein Tiefpassfiltern, das zwischen den Begrenzungsmitteln und den Bewegungsschätzmittel angeordnet ist.

## Revendications

1. Procédé d'estimation du mouvement, en vidéo numérique Pal-Plus, par comparaison de blocs comprenant un ensemble de valeurs de pixels d'images successives de la vidéo et par détermination de vecteurs de mouvement en tant que résultat d'une telle étape de comparaison, dans lequel une image encodée en Pal-Plus comprend des lignes centrales et des lignes d'assistance pour la télédiffusion, les lignes d'assistance présentant des valeurs de luminance de pixels pour la restauration de la résolution verticale complète de la luminance, **caractérisé par** une troncature des valeurs de luminance des pixels, au moins des lignes d'assistance, à une valeur de seuil de pixel d'un niveau de noir normal déterminé, dans le cas où les valeurs de luminance des pixels sont en dessous de la valeur de seuil de luminance de pixel, et par l'utilisation des valeurs tronquées de luminance de pixels dans la plage du seuil de luminance de pixel et au-dessus pour l'estimation du mouvement.

2. Procédé selon la revendication 1, **caractérisé en ce que** la valeur de seuil de luminance de pixel est 16.

3. Procédé selon l'une des revendications 1 ou 2, **caractérisé par** un filtrage passe-bas des données de vidéo numérique après l'étape de troncature et avant l'estimation de mouvement.

4. Dispositif de traitement de vidéos numériques encodées en Pal-Plus,
dans lequel les images encodées en Pal-Plus des vidéos comprennent des lignes centrales et des lignes d'assistance pour la télédiffusion, les lignes d'assistance présentant des valeurs de luminance de pixel pour la restauration de la résolution verticale complète de la luminance, ce procédé comprenant des moyens d'estimation de mouvement pour comparer des blocs incluant un ensemble de valeurs de luminance de pixels d'images successives de la vidéo et pour déterminer des vecteurs de mouvement en tant que résultat de ladite étape de comparaison, **caractérisé par**
des moyens pour tronquer les valeurs de luminance de pixel, au moins des lignes d'assistance, à une valeur de seuil de luminance de pixel d'un niveau normal de noir déterminé, dans le cas où les valeurs de luminance de pixels sont en dessous de la valeur de seuil de luminance de pixel,
dans lesquels les moyens de troncature sont situés en amont des moyens d'estimation de mouvement, de façon à ce que les moyens d'estimation de mouvement reçoivent, pour l'estimation de mouvement, les valeurs tronquées de luminance de pixel situées dans la plage de la valeur de seuil de luminance de pixel et au-dessus.

5. Dispositif selon la revendication 4, **caractérisé par** un filtre passe-bas disposé entre les moyens de troncature et les moyens d'estimation de mouvement.
